# EUROPEAN PATENT APPLICATION

(11) **EP 1 906 318 A1**
(43) Date of publication of application: **02.04.2008**
(21) Application number: 07021312.9
(22) Date of filing: 30.11.2000
(51) Int. Cl.: G06F 17/30

(54) **Dynamic content based assisted information browsing**

(30) Priority: 30.11.1999 US 452328
(62) Divisional of application: 00982330.3
(71) Applicant: Hall Aluminum LLC, Los Altos, CA 94022 (US)
(72) Inventor: Porter, Swain W., Kirkland Washington 98034 (US)
(74) Representative: Leinweber & Zimmermann

(57) **Abstract**

In a client system, an automated method for assisting a user of the client system in retrieving and browsing information, the method comprising:
Retrieving and displaying on a display of the client system a first information page responsive to user direction; and
additionally displaying on the display a plurality of dynamically assembled information source identifiers identifying a plurality of information sources for user selection, wherein the information source identifiers are dynamically assembled, based at least in part on dynamically determined content of said first information page.

## Description

### BACKGROUND OF THE INVENTION

### 1. Field of the Invention

The present invention relates to the field of computerized information retrieval and browsing. More specifically, the present invention relates to methods and apparatuses associated with dynamic content based assistance provided to facilitate information retrieval and browsing.

### 2. Background Information

With the recent advances in microprocessor, telecommunication and networking technology, increasing number of computer systems are being networked together through private and public networks, such as the Internet. Volumes of information stored on information servers (such as web servers of the World Wide Web) are now available to users of computer systems with a few clicks of a mouse button. For many users, the ease of access has actually created an information overload situation. Early solution has been to categorize as much of the information available as possible, such as the directory or index services offered by Internet portals like Yahoo and Lycos. Even then, a simple search restricted to one categorization could still result in hundreds of potential hits, requiring a large amount of user time to sort out the useless from the useful. As a result, users are frustrated, and information technology are prevented from realizing its full potential in reaching the ubiquitous state.

Various automated techniques in assisting a user in retrieving and browsing information have been proposed and/or experimented. In U.S. Patent 5,727,129. entitled "Network system for profiling and actively facilitating user activities", issued to Barrett et al, a system and method for assisting a user in accessing information stored at remote network sites was disclosed. Under Barrett, an archive is maintained of remote sites accessed and instances in which the same remote sites are accessed in sequence. Statistics regarding information such as the number of times a site has been accessed, and the times a given set of sites have been accessed in sequence are maintained. Based on this information, information items are identified which the user is predicted to be likely to want to access. In U.S. Patent 5,960,429, entitled "Multiple reference hotlist for identifying frequently retrieved web pages", issued to Peercy et al, a method and apparatus for locating web pages was disclosed. Under Peercy, a count of retrievals of a web page is accumulated and the accumulated count and an address for the web page are stored in a record of a history log database. A multiple reference hotlist is formatted for the user from the records in the history log. Each of these prior art techniques has its pros and cons. Thus, additional techniques that can further improve the ease of information retrieval and browsing, even in limited circumstances, are desired.

### SUMMARY OF THE INVENTION

An automated method including automatic provision of additional display of a number of identifiers identifying information sources for assisting a user of the client system in retrieving and browsing information is disclosed. Under the method, in response to the retrieval and display on a display of a client system a first information page responsive to user direction, the additional display is provided. The information source identifiers are dynamically assembled, based at least in part on the content of said first information page. In one embodiment, a thumbnail corresponding to the information page identified by an information page identifier is also provided responsive to a user event.

### BRIEF DESCRIPTION OF DRAWINGS

The present invention will be described by way of exemplary embodiments, but not limitations, illustrated in the accompanying drawings in which like references denote similar elements, and in which:
**Figure 1** illustrates an overview of the present invention;
**Figure 2** illustrates the browser and the augmented dynamic content based assistance functions and databases of **Fig. 1** in further detail in accordance with one embodiment;
**Figures 3a-3b** illustrate one embodiment each of the related keyword database and related information source database of **Fig. 2****;**
**Figure 4** illustrates a manner for designating a current table pair, in accordance with one embodiment;
**Figure 5** illustrates a method of the present invention in accordance with one embodiment;
**Figures 6a-6d** illustrate four network embodiments for practicing the present invention in accordance with four embodiments; and
**Figure 7** illustrates an example digital system suitable for practicing the present invention.

### DETAILED DESCRIPTION OF THE INVENTION

In the following description, various aspects of the present invention will be described. However, it will be apparent to those skilled in the art that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented using terms such as tables, keys, identifiers and so forth, commonly employed by those skilled in the art to convey the substance of their work to others skilled in the art. Parts of the description will be presented in terms of operations performed by a computer system, using terms such as parsing, accessing, retrieving, and so forth. As well understood by those skilled in the art, these quantities take the form of electrical, magnetic, or optical signals capable of being stored, transferred, combined, and otherwise manipulated through mechanical and electrical components of a digital system; and the term digital system include general purpose as well as special purpose data processing machines, systems, and the like, that are standalone, adjunct or embedded.

Various operations will be described as multiple discrete steps performed in turn in a manner that is most helpful in understanding the present invention, however, the order of description should not be construed as to imply that these operations are necessarily order dependent, in particular, the order the operations are presented. Furthermore, the phrase "in one embodiment" will be used repeatedly, however the phrase does not necessarily refer to the same embodiment, although it may.

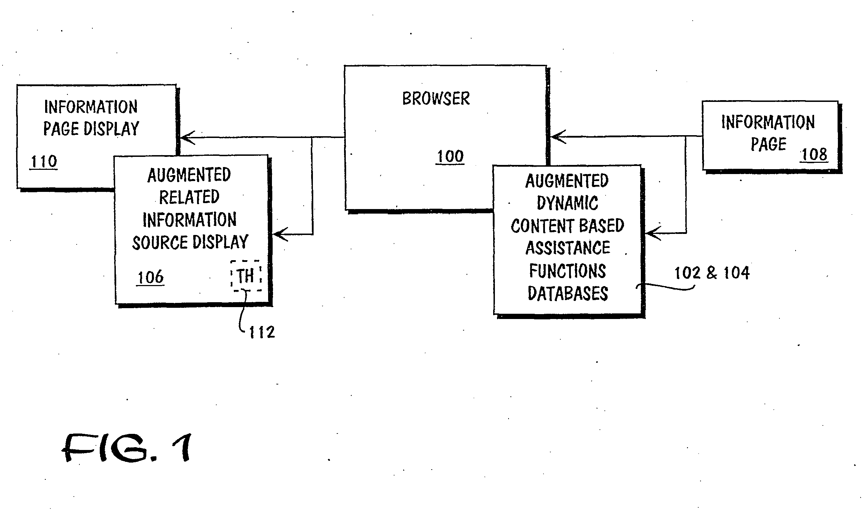

Referring now to **Figure 1****,** wherein an overview of the present invention is shown. As illustrated, in accordance with the present invention, browser **100** is augmented with a number of functions **102** and databases **104** to provide dynamic content based assistance to a user to retrieve and browse information pages. More specifically, functions **102** and databases **104** enable browser **100** to facilitate augmented provision of a number of dynamically assembled other information source identifiers **106** based at least in part on dynamically determined contents of information page **108.** (The display of information page **108** is illustrated as information page display **110.)** information page **108** is intended to represent a broad range of informational units known in the art, including but not limited to information "documents" formed using mark-up languages, such as HTML and XML. In one embodiment, functions **102** further enable browser **100** to provide thumbnails **112** of information pages corresponding to provided information source identifiers **108.** A thumbnail of an information page, as described in more detail below, is a dithered down image of the information page. Thumbnails **112** are provided to enable the user to have a rough overview of what the information page is about. In one embodiment, a thumbnail is provided in response to a user event, such as when a user proximately placing a cursor "next" to an information source identifier. What constitutes "proximately placed" is application dependent.

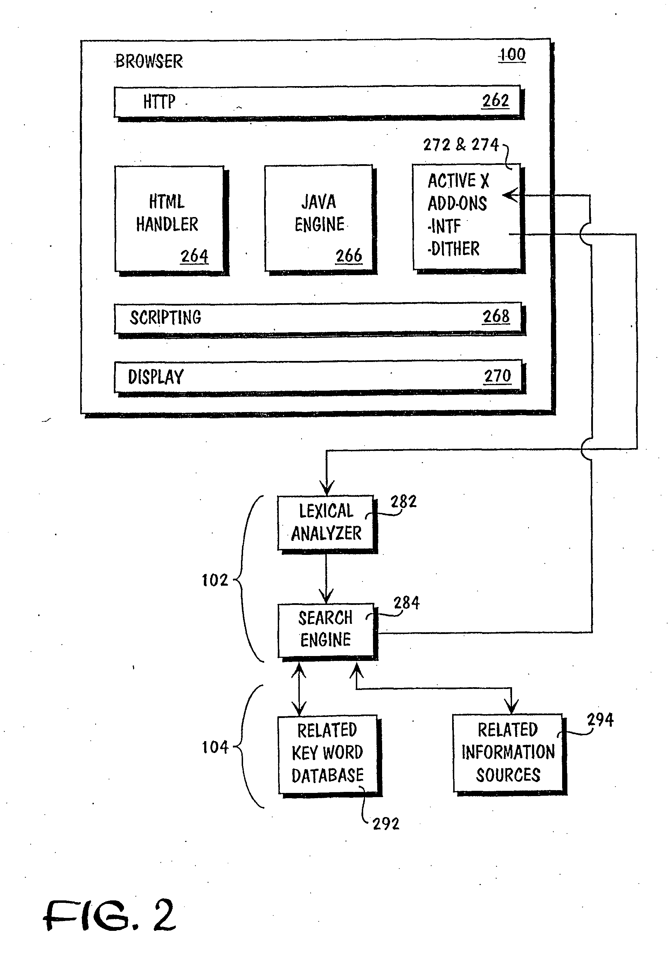

**Figure 2** illustrates browser **100** as well as augmented functions **102** and databases **104** in further detail, in accordance with one embodiment. As illustrated, browser **100** includes conventional elements found in many browsers known in the art, HTTP interface **262,** HTML web page handler **264,** JAVA^{™} and JavaScript execution engine **266,** other script interpreter **268** (e.g. CGI), display interface **270,** and a number of "plug-ins" (or add-ons), shown as additional Active-X components **272-274.** Included among these Active-X components **272-274** is a component **272** that interfaces with selected ones of augmented functions **102,** and a dithering module **274.** Augmented functions **102** include lexical analyzer **282 and** search engine **284,** and augmented databases **104** include related keyword database **292** and related information sources database **294.**

Lexical analyzer **282,** for the illustrated embodiment, is used to determine in real time, unique nouns presence in the information page browsed. In alternate embodiments, lexical analyzer **282** may be used to determine presence of other types of words/terms presence in the information page, e.g. words/terms that are specially tagged.

Search engine **284** is used to determine in real time, presence of certain keywords in the information page being browsed, for the illustrated embodiment, using unique nouns outputs by lexical analyzer **282.** More specifically, search engine **284** uses the unique nouns to access related keyword database **292** to determine if any of the unique nouns are keywords of interest. Search engine **284** is additionally used to determine in real time, related keywords for the presence ones of the keywords of interest in the information page being browsed. For the illustrated embodiment, search engine **284** makes the determination by retrieving the related keywords stored in related keyword database **292** for a keyword of interest, when a unique noun matches the keyword of interest Search engine **284** is further used to determine in real time, the information source identifiers to be provided in view of the determined related keywords. For the illustrated embodiment, search engine **284** makes the determination by retrieving the information source identifiers from database **294** using the determined related keywords.

Lastly, as described earlier, add-on dithering module **274** is used to dither a retrieved one of the information pages identified by the augmented information source identifiers, to generate a thumbnail for the information page. In one embodiment, both the retrieval and dithering of the information page are performed when the thumbnail is needed. In another embodiment, the information page is pre-fetched, and the dithering is performed when the thumbnail is needed. In yet another embodiment, the information page is pre-fetched and the dithering is performed in advance before the thumbnail is needed.

Except for the role they play to collectively facilitate practice of the present invention, in and of the themselves, each of the enumerated functions, interface **272,** dithering module **274,** lexical analyzer **282,** and searching engine **284** are generally known in the art, and may be implemented using any one of a number of techniques and programming languages known. Accordingly, they will not be otherwise further described.

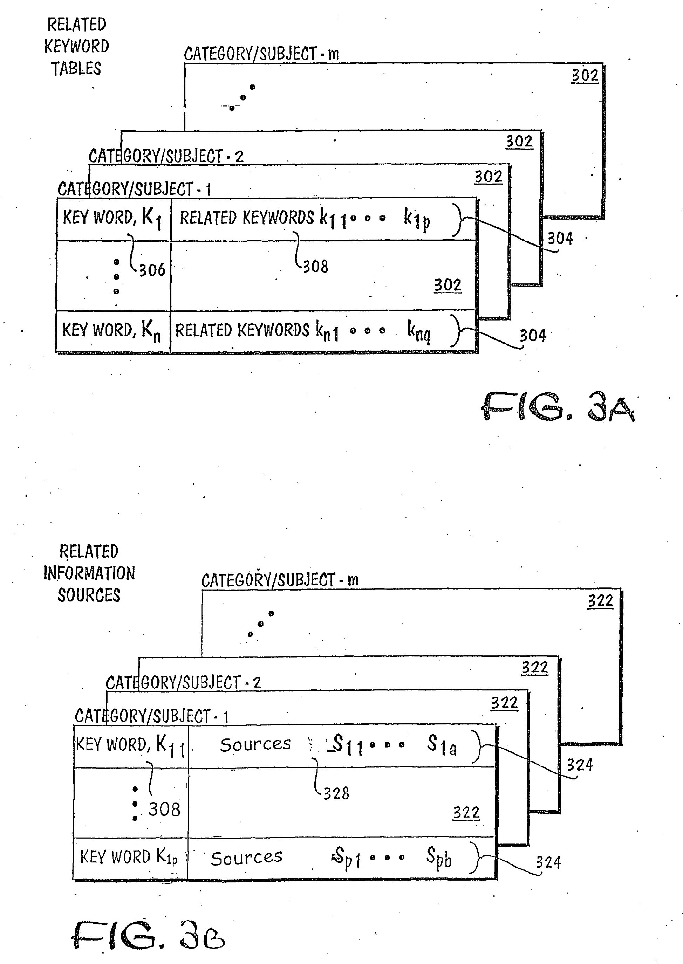

**Figures 3a-3b** illustrate one embodiment each of related keyword database **292** and information source database 294. For the illustrated embodiment, related keyword database **292,** as shown in **Fig. 3a****,** is constituted with a number of tables **302.** Stored inside each table **302** are related keyword entries **304.** Each related keyword entry **304** includes related keywords **308** for a keyword of interest **306.** Similarly, for the illustrated embodiment, information source database **294,** as shown in **Fig. 3b****,** is constituted with a number of tables **322.** Stored inside each table **322** are information source entries **324.** Each information source entry **324** includes information source identifiers **328** for a related keyword **308.**

For the illustrated embodiment, keywords of interest **306** (and therefore, their related keywords **308** and associated information source identifiers **328)** are organized by categories or subjects. For examples, a series of tables may contain related keywords for various keywords of interest for Biology, Physics, Chemistry, History, Literature, and so forth; another series of tables may contain related keywords for various keywords of interest for Doctors, Dentists, Lawyers, Accountants, Financial Advisers, and so forth, and yet another series of tables may contain related keywords for various keywords of interest for Classical Music, Rock and Roll Music, Country Western Music, and so forth. There is no limitation to how the tables may be organized.

For the illustrated embodiment, one of the corresponding table pairs **302** and **322** is designated as the "current" table pair. During operation, search engine **284** accesses only table **302** of the designated "current" table pair to determine whether certain keywords of interest are presence in an information page being browsed. The associated information source identifiers for each determined presence ones of keywords of interest are retrieved from the corresponding information source table **322** of the designated "current" table pair.

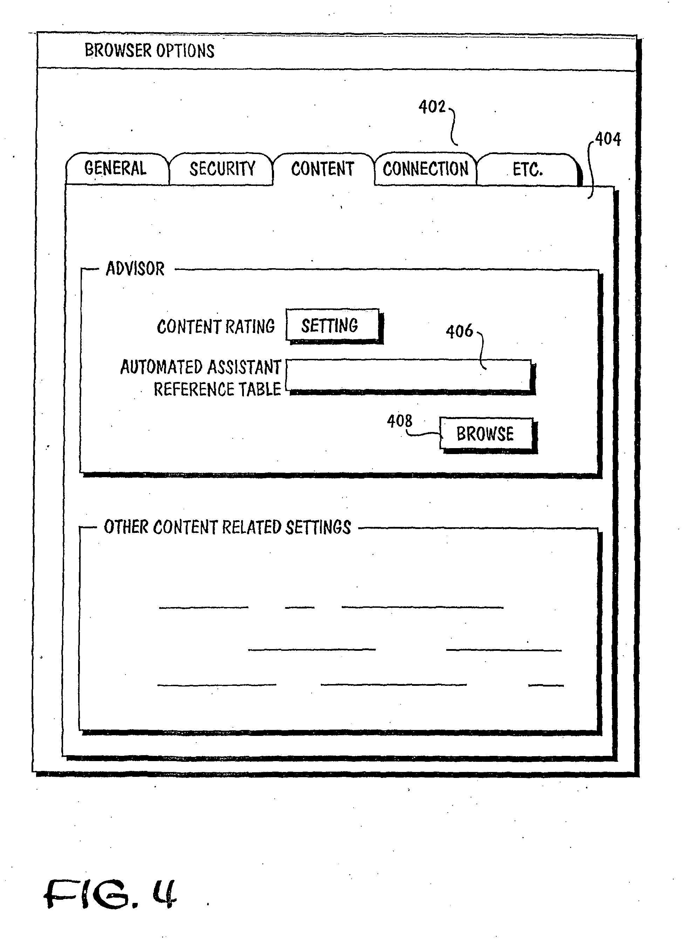

**Figure 4** illustrates a manner in which the "current" table pair may be designated, in accordance with one embodiment. The manner illustrated is similar to the "tab" based pop-up approach in setting browser or software options in general. For the illustrated embodiment, option "pop up" **402** includes tab page **404** for setting various content related options. Among the various settable content related options is field **406** for entering the name of the keyword of interest and information source table pair to be designated as the "current" table pair. Field **406** has associated browse button **408** for displaying a list of table-pairs available for selection. The approach is basically known in the art, accordingly, will not be otherwise further described.

The information contained in the various tables may be tabulated manually or using an automated process or a combination of both, by a vendor. The tabulation may be repeated periodically to continually re-fine the keywords of interest, their relationship to other keywords, as well as the associated information sources.

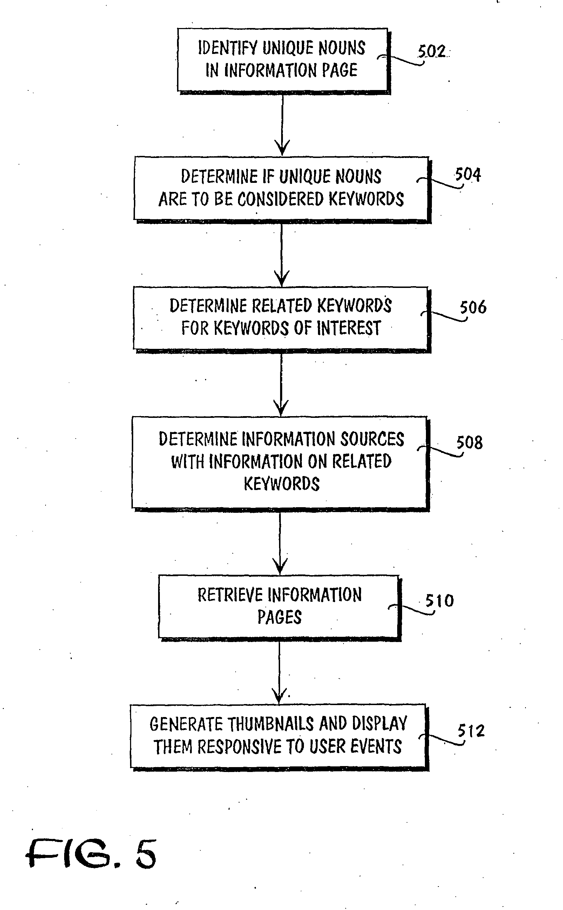

**Figure 5** illustrates a method of the present invention, in accordance with one embodiment. As illustrated, at **502,** unique nouns of an information page are identified. In the earlier described embodiment, the identification is performed by the lexical analyzer. At **504,** the unique nouns are determined if they are to be considered as keywords of interest. In the earlier described embodiment, this is performed by the search engine accessing the related keyword database. At **506,** the related keywords are determined for the presence ones of the keywords of interest. In the earlier described embodiment, this is also performed by the search engine accessing the related keyword database. At **508,** the associated information sources, i.e. their identifiers, are identified for each of the retrieved related keywords for the presence ones of the keywords of interest. In the earlier described embodiment, this is performed by the search engine accessing the information source database.

At **510,** the information pages corresponding to the retrieved information source identifiers are pre-fetched. In one embodiment, this is performed by the browser itself. At **512,** the retrieved information pages are dithered to generate the thumbnails to have them available for use on demand. In the earlier described embodiment, this is performed by the add-on dither module.

While for ease of understanding, the method has been described with the operations being performed one after the other, first the unique nouns are determined, then the keywords of interest are determined, as so forth. Those skilled in the art will appreciate that in alternate embodiments, the various operations may be performed in an overlapped or interleaving manner. That is, as soon as a unique noun is determined, whether it is a keyword of interest may be determined, without awaiting all unique nouns to be determined. Likewise, once a keyword of interest is identified, its related keywords may be determined, without awaiting all keywords of interest to be identified. These principles apply equally to all the later operations.

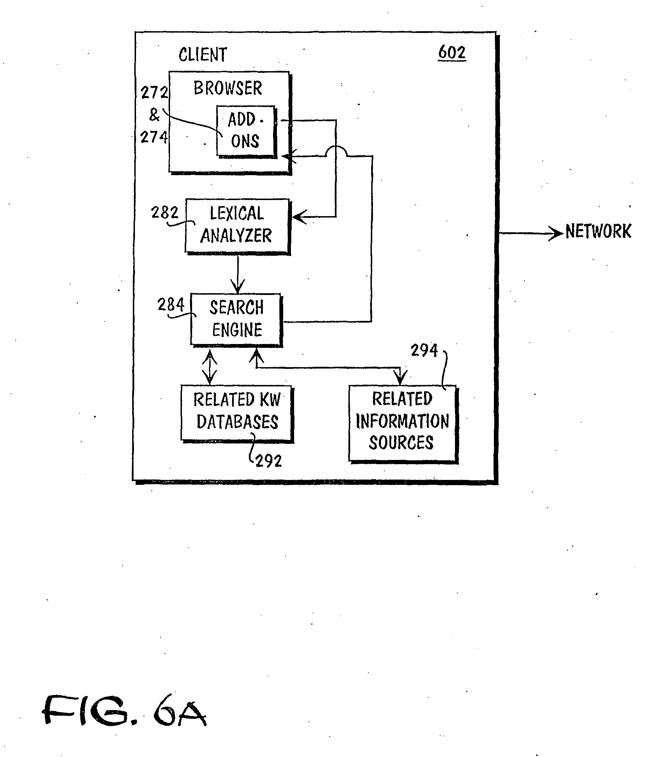

**Figures 6a-6d** illustrate four example network environments for practicing the present invention in accordance with four embodiments. The embodiment of **Fig. 6a** represents an embodiment, where all the relevant earlier described elements, i.e. add-on interface and dither modules **272** and **274,** lexical analyzer **282,** search engine **284,** and databases **292** and **294** are all provided to a client system **602** coupled to a network (e.g. the Internet). These relevant elements may be loaded onto client system **602** via a distribution medium (not shown) or downloaded from a distribution server (not shown). Note that a user may load/download only a subset of databases **292** and 294 tabulated by a vendor, or load/download them from multiple vendor sources.

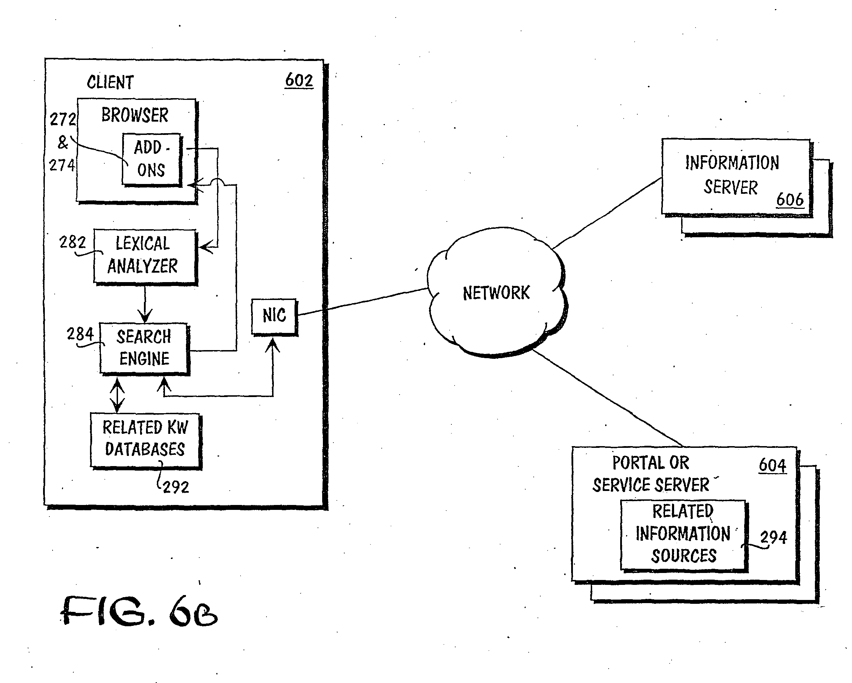

The embodiment of **Fig. 6b** represents an alternate embodiment, where except for information source database **294,** all other relevant earlier described elements, i.e. add-on interface and dither modules **272** and **274,** lexical analyzer **282,** search engine **284,** and databases **292** are provided to a client system **602** coupled to a network (e.g. the Internet). Information source database **294** is disposed on portal or service server **604** instead. During operation, upon determining the related keywords, search engine **284** would access database **294** remotely to retrieve the associated information source identifiers.

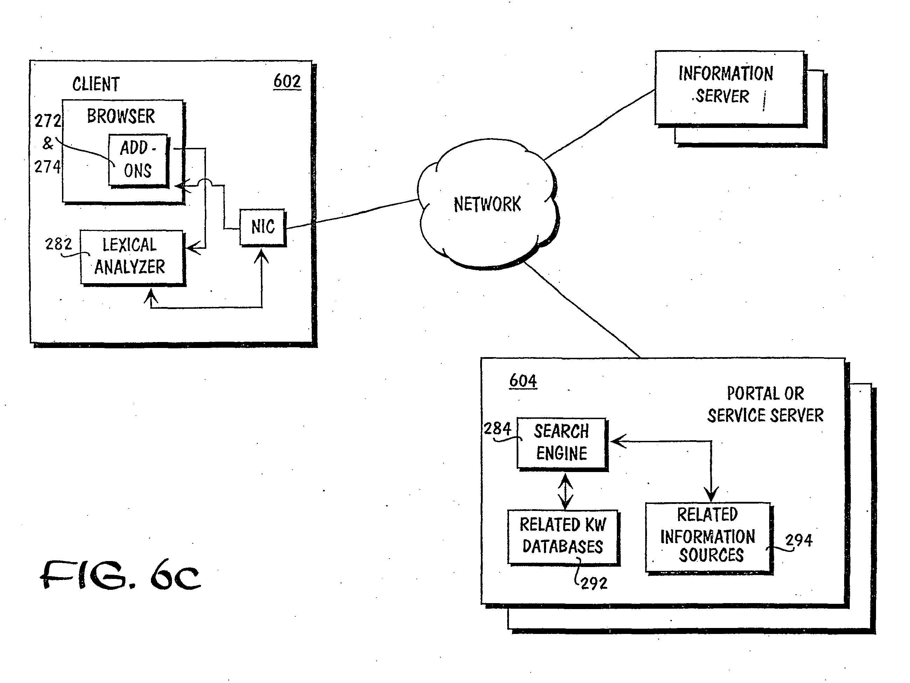

The embodiment of **Fig. 6c** represents yet another alternate embodiment, where only add-ons **272** and **274** and lexical analyzer **282** are provided to a client system **602** coupled to a network (e.g. the lnternet)., Otherwise, search engine **284,** and databases **292** and **294** are disposed on portal or service server **604** instead. During operation, upon determining the unique nouns, lexical analyzer **282** would provide the unique nouns to search engine **284** on serer **604** instead. Search engine **284,** in turn determines the keywords of interest, their related keywords, and ultimately the assoc:iated information source identifiers; and provide them to client **602,** as described earlier.

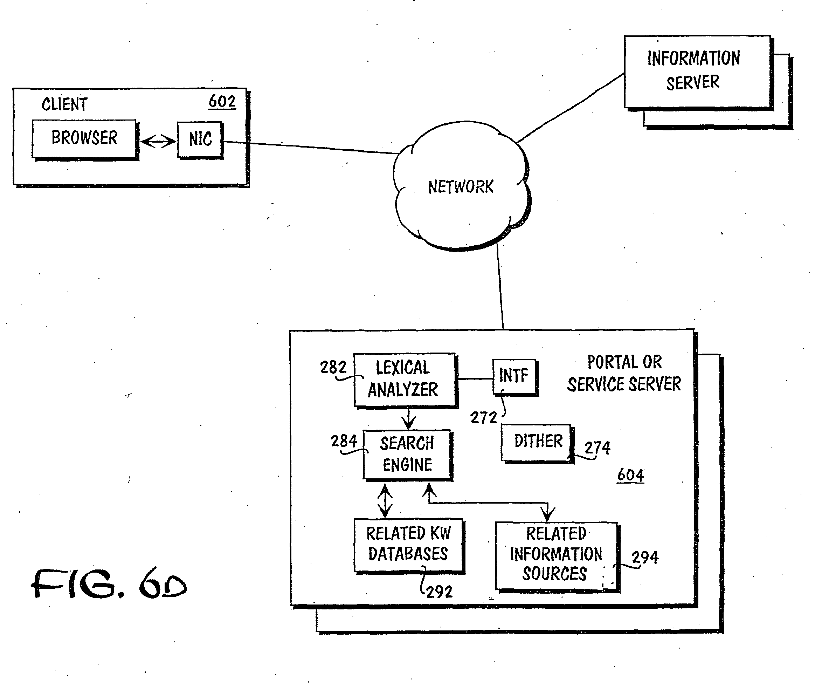

The embodiment of **Fig. 6d** represents yet another alternate embodiment, where all the relevant earlier described elements, i.e. interface and dither modules **272** and **274,** lexical analyzer **282,** search engine **284,** and databases **292** and **294** are all disposed on one or more portal or service server **604** instead. During operation, browser **100** would keep interface **272** informed of the identity of the information page being browsed (e.g. in the case of a web page, providing interface **272** with the web page's URL). Interface **272** causes server **604** to obtain its own copy of the information page. Therefore, lexical analyzer **282** and search engine, would all function (using databases **292** and **294)** as described earlier, leading to the eventual provision of the information source identifiers to client **602.**

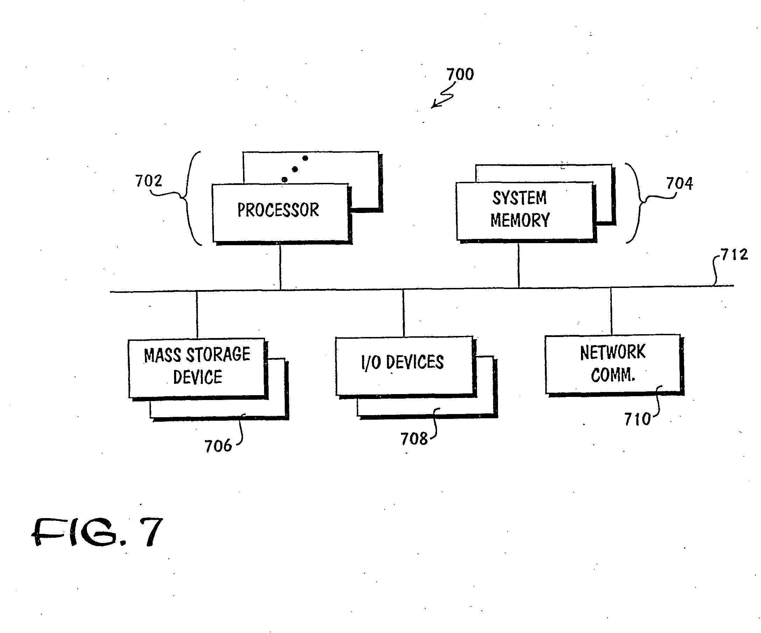

**Figure 7** illustrates one embodiment of an exemplary digital system suitable for use to practice the present invention, either as a client system or a server system. As a client system, digital system **700** may be a desktop computer system, a laptop computer system, a palm sized computing device, a set-top box, an internet appliance and the like. As a server, digital system **700** may a single or a cluster of computer systems. As shown, exemplary digital system **700** includes one or more processors **702** and system memory **704.** Additionally, system **700** includes mass storage devices **706** (such as diskette, hard drive, CDROM and so forth), input/output devices **708** (such as keyboard, cursor control and so forth) and communication interfaces **710** (such as network interface cards, modems and so forth). The elements are coupled to each other via system bus **712,** which represents one or more buses. In the case of multiple buses, bridged by one or more bus bridges (not shown). Each of these elements perform its conventional functions known in the art. In particular, system memory **704** and mass storage **706** are employed to store a working copy and a permanent copy of the programming instructions implementing the teachings of the present invention The permanent copy of the programming instructions may be loaded into mass storage **706** in the factory, or in the field, as described earlier, through a distribution medium (not shown) or through communication interface **710** (from a distribution server (not shown). The constitution of these elements **702-712** are known, and accordingly will not be further described.

Thus, a novel method and apparatus for dynamically assisting a user in information retrieval and browsing, based on the content of an information page has been described. While the present invention has been described in terms of the above illustrated embodiments, those skilled in the art will recognize that the invention is not limited to the embodiments described. The present invention can be practiced with modification and alteration within the spirit and scope of the appended claims. The description is thus to be regarded as illustrative instead of restrictive on the present invention.

## Claims

1. In a client system, an automated method for assisting a user of the client system in retrieving and browsing information, the method comprising:
retrieving and displaying on a display of the client system a first information page responsive to user direction; and
additionally displaying on the display a plurality of dynamically assembled information source identifiers identifying a plurality of information sources for user selection, wherein the information source identifiers are dynamically assembled, based at least in part on dynamically determined content of said first information page.

2. The method of claim 1, wherein said additionally displaying comprises performing on said client system in real time, analysis of the first information page to determine presence of first keywords.

3. The method of claim 2, wherein said analysis comprises performing on said client system in real time, scanning of said first information page for unique nouns presence, accessing a current table of keywords on the client system to determine if any of the unique nouns are to be considered as keywords, and outputting those unique nouns that should be so considered as the presence ones cf said first keywords.

4. The method of claim 3, wherein the method further comprises designating to a browser of the client system a first of a plurality of tables of keywords on the client system as the current table of keywords of the client system.

5. The method of claim 4, wherein the method further comprises loading/downloading said plurality of tables of keywords onto the client system.

6. The method of claim 2, wherein said additional displaying further comprises performing on said client system in real time, retrieval of second keywords related to the presence ones of first keywords from one or more tables of related keywords on said client system, using said presence ones of first keywords.

7. The method of claim 6, wherein said additional displaying further comprises performing on said client system in real time, retrieval of information source identifiers identifying information sources having information associated with the second keywords from one or more information source tables on said client system, using said second keywords.

8. The method of claim 7, wherein the method further comprises loading/downloading said one or more tables of information sources onto the client system.

9. The method of claim 2, wherein said additional displaying further comprises performing on the client system in real time, assembly of the plurality of information source identifiers dynamically identified based at least in part on presence ones of first keywords in said information page.

10. The method of claim 1, wherein said additional displaying comprises performing on the client system in real time, transmission to a server a selected one of (a) a locator of the first information page, (b) a plurality of unique nouns of the first information page, (c) a plurality of first keywords present in the first information page, and (d) a plurality of second keywords related to the first keywords.

11. The method of claim 1, wherein said first information page is an information page constituted using a mark-up language, and said information sources comprises servers serving information pages so constituted.

12. The method of claim 1, wherein the method further comprises additionally displaying on said display a thumbnail of a second information page corresponding to a first of the information sources.

13. The method of claim 12, wherein said additional displaying of a thumbnail comprises performing on said client system in real time, a selected one of (a) retrieving said thumbnail and (b) retrieving said second information page and dithering said retrieved second information page to form said thumbnail.

14. The method of claim 12, wherein said additional displaying of a thumbnail is made responsive to proximate placement of a cursor next to a first information source identifier corresponding to said first information source.

15. In a client system, an automated method for assisting a user of the client system to retrieve and browse information, the method comprising:
presenting on a display of the client system, a plurality of dynamically constituted information source identifiers identifying a plurality of information sources for user selection, based at least in part on presence ones of first keywords in a first information page; and
presenting on the display, responsive to a user event, a thumbnail of a second information page corresponding to a first of the identified information sources.

16. The method of claim 15, wherein said presenting of the thumbnail comprises performing on the client system in real time, a selected one of (a) retrieving said thumbnail and (b) retrieving said second information page, and dithering said retrieved second information page to form said thumbnail.

17. The method of claim 15, wherein said presenting of the thumbnail is made responsive to proximate placement of a cursor next to a first information source identifier corresponding to the first information source.

18. In a server system, an automated method for facilitating provision of assistance to a user of a networked client system to retrieve and browse information, the method comprising:
receiving from said client system dynamically determined related first keywords of presence ones of second keywords in a first information page being browsed on said client system; and
in response, providing to said client system a plurality of information source identifiers identifying a plurality information sources, based at least in part on said received related first keywords.

19. The method of claim 18, wherein the method further comprises providing to said client system a thumbnail of a second information page corresponding to a first of said information source identifiers.

20. The method of claim 19, wherein the method further comprises retrieving said second information page and dithering said second information page to form said thumbnail.

21. In a server system, an automated method for facilitating provision of assistance to a user of a networked client system to retrieve and browse information, the method comprising:
receiving from said client system dynamically determined presence ones of first keywords in a first information page being browsed on said client system; and
in response, providing to said client system a plurality of information source identifiers identifying a plurality information sources, based at least in part on said received presence ones of first keywords.

22. The method of claim 21, wherein the method further comprises dynamically determining related second keywords of said presence ones of first keywords; and said providing of information source identifiers to said client system is made based at least in part on said dynamically determined related second keywords.

23. The method of claim 21, wherein the method further comprises providing to said client system a thumbnail of a second information page corresponding to a first of said information source identifiers.

24. The method of claim 23, wherein the method further comprises retrieving said second information page and dithering said second information page to form said thumbnail.

25. In a server system, an automated method for facilitating provision of assistance to a user of a networked client system to retrieve and browse information, the method comprising:
receiving from said client system dynamically determined unique nouns of a first information page being browsed on said client system; and
in response, providing to said client system a plurality of information source identifiers identifying a plurality information sources, based at least in part on said received unique nouns.

26. The method of claim 25, wherein the method further comprises dynamically determining presence ones of first keywords in said information page using said received unique nouns; and said providing of information source identifiers to said client system is made based at least in part on said dynamically determined presence ones of first keywords.

27. The method of claim 26, wherein the method further comprises dynamically determining related second keywords of said presence ones of first keywords; and said providing of information source identifiers to said client system is further made based at least in part on said dynamically determined related second keywords.

28. The method of claim 25, wherein the method further comprises providing to said client system a thumbnail of a second information page corresponding to a first of said information source identifiers.

29. The method of claim 28, wherein the method further comprises retrieving said second information page and dithering said second information page to form said thumbnail.

30. In a server system, an automated method for facilitating provision of assistance to a user of a networked client system to retrieve and browse information, the method comprising:
receiving from said client system a locator of a first information page being browsed on said client system; and
in response, providing to said client system a plurality of information source identifiers identifying a plurality information sources, based at least in part on dynamically determined content of the first information page.

31. The method of claim 30, wherein the method further comprises retrieving said first information page and dynamically determining presence ones of first keywords in said information page; and said providing of information source identifiers to said client system is made based at least in part on said dynamically determined presence ones of first keywords.

32. The method of claim 31, wherein the method further comprises dynamically determining related second keywords of said presence ones of first keywords; and said providing of information source identifiers to said client system is further made based at least in part on said dynamically determined related second keywords.

33. The method of claim 30, wherein the method further comprises providing to said client system a thumbnail of a second information page corresponding to a first of said information source identifiers.

34. The method of claim 33, wherein the method further comprises retrieving said second information page and dithering said second information page to form said thumbnail.

35. A client system comprising:
a browser to facilitate viewing of a first retrieved information page; and
a keyword database coupled to the browser, having first and second plurality of keywords, the second keywords being related to said first keywords, to facilitate determination of presence ones of first keywords in said first retrieved information page being viewed, and to facilitate determination of related second keywords of said presence ones of first keywords, to facilitate augmented provision by said browser a plurality of dynamically assembled information source identifiers identifying a plurality of information sources based at least in part on said related second keywords.

36. The client system of claim 35, wherein the browser is augmented with a lexical analyzer to, facilitate determination of unique nouns in said first retrieved information page being browsed, for use in said determination of presence ones of first keywords in said first retrieved information page being browsed.

37. The client system of claim 35, wherein the client system further comprises an information source database having said second keywords and a plurality of associated information source identifiers to facilitate said augmented provision of dynamically assembled information source identifiers by said browser.

38. The client system of claim 35, wherein the client system further comprises a dithering module to dither a second retrieved information page to generate a thumbnail of the second retrieved information page.

39. A server system comprising:
a network interface to couple the server system to a network;
an information source database having a first plurality of keywords and a plurality of associated information source identifiers to facilitate augmented provision by a browser of a coupled client system dynamically assembled information source identifiers, based at least in part on dynamically determined content of a first retrieved information page being browsed on said client system.

40. The server system of claim 39, wherein the server system further comprises
a keyword database, having a second plurality of keywords and said first plurality of keywords, the first keywords being related to said second keywords, to facilitate determination of presence ones of first keywords in said first retrieved information page being viewed, and to facilitate determination of related second keywords of said presence ones of first keywords, for use to perform said facilitation of augmented provision by said browser of a plurality of dynamically assembled information source identifiers.

41. The server system of claim 39, wherein the server system further comprises a lexical analyzer to facilitate determination of unique nouns in said first retrieved information page being browsed, for use in said determination of presence ones of first keywords in said first retrieved information page being browsed.

42. The server system of claim 39, wherein the server system further comprises a dithering module to dither a second retrieved information page to generate a thumbnail of the second retrieved information page.
